# EUROPÄISCHE PATENTSCHRIFT

(11) **EP 0 702 353 B1**
(45) Veröffentlichungstag und Bekanntmachung des Hinweises auf die Patenterteilung: **16.01.2002**
(21) Anmeldenummer: 95202394.3
(22) Anmeldetag: 05.09.1995
(51) Int. Cl.: G10L 15/18, G06F 17/30

(54) **System und Verfahren zum Ausgeben von Sprachinformation in Reaktion auf eingegebene Sprachsignale**
System and method for outputting synthetic speech in response to input speech signals
Système et procédé de reproduction synthétique de parole en réponse aux signaux de parole fournis

(30) Priorität: 14.09.1994 DE 4432632
(43) Veröffentlichungstag der Anmeldung: 20.03.1996
(73) Patentinhaber: Philips Corporate Intellectual Property GmbH, 52064 Aachen (DE); Koninklijke Philips Electronics N.V., 5621 BA Eindhoven (NL)
(72) Erfinder: Aust, Harald, c/o Philips, D-22335 Hamburg (DE)
(74) Vertreter: Volmer, Georg, Dipl.-Ing.

(56) Entgegenhaltungen:
- EP-A- 0 597 630
- WO-A-92/16906
- DE-A- 3 600 762
- JP-A- 5 324 713
- US-A- 4 718 092
- US-A- 4 914 590
- KAMEL ET AL.: "A graph based knowledge retrieval system" PROCEEDINGS OF THE INTERNATIONAL CONFERENCE ON SYSTEMS, MAN, AND CYBERNETICS, 4. - 7.November 1990, LOS ANGELES, CA, US, Seiten 269-275, XP000215352
- GIACHIN: "Automatic training of stochastic finite-state language models for speech understanding" INTERNATIONAL CONFERENCE ON ACOUSTICS, SPEECH AND SIGNAL PROCESSING 1992, Bd. 1, 23. - 26.März 1992, SAN FRANCISCO, CA, US, Seiten 173-176, XP000341111

## Beschreibung

Die Erfindung betrifft allgemein ein System und ein Verfahren zum Ausgeben von Sprachinformation in Reaktion auf eingegebene Sprachsignale und insbesondere ein automatisches Auskunftssystem, bei dem auf gesprochene Fragen Antworten in Form von vollständigen Sätzen ausgegeben werden, wobei diese Antworten auch Rückfragen oder Folgefragen sein können. Die Antworten werden dabei über eine Datenbankanfrage ermittelt, die aus dem eingegebenen Sprachsignal abgeleitet wird.

Derartige Systeme sind insbesondere Auskunftssysteme, mittels der Personen eine Auskunft auf Anfragen erhalten, ohne daß hierfür eine weitere Bedienungsperson erforderlich ist. Ein Beispiel hierfür ist ein automatisches Auskunftssystem für Zugverbindungen oder Flugverbindungen. Bekannte Auskunftssysteme sind häufig nicht benutzerfreundlich, da der Benutzer in vielen Fällen bestimmte Tasten des Telefons drücken muß oder nur eines von wenigen Wörtern sprechen darf, die das System verstehen kann. Dafür ist das System oft menügesteuert und durch ausführliche Erläuterungen begleitet. Es sind zwar auch schon Systeme beschrieben worden, beispielsweise in den Konferenzberichten zur ICASSP92, San Francisco, 1992, Vol. 1, Seiten 1-173 bis 1-176, wo eine weitgehend uneingeschränkte Sprache, d.h. natürliche Sprache, für die Eingabe zugelassen wird. Diese bekannten Systeme arbeiten jedoch nicht sehr zuverlässig.

Aus der DE 36 00 762 A1 ist ein System bekannt, das Spracheingaben eines Benutzers, insbesondere gesprochene Befehle, erkennt und in Reaktion darauf Sprachinformation akustisch ausgibt. Die Sprachinformation stellt im idealen Fall die Aufforderung für die Eingabe eines weiteren Befehls dar. Wenn jedoch der Benutzer daraufhin erkennt, dass zumindest der zuletzt eingegebene Befehl falsch erkannt worden ist, und er dies dem System in Form eines Protestes mitteilt, kann die ausgegebene Sprachinformation auf eine Wiedergabe des zuletzt erkannten Befehls umgeschaltet werden, bevor eine weitere Aufforderung ausgegeben wird. Damit ist dieses bekannte System in begrenztem Maße anpassungsfähig, jedoch sind die vom Benutzer abzugebenden Spracheingaben in einem relativ engen Maß vorgegeben. Die Eingabe von weitgehend frei formulierten Angaben ist dabei nicht zulässig.

Aus der US-PS 4,718,092 ist ein Verfahren zur Spracherkennung bekannt, bei dem ein Sprachmodell verwendet wird. Gemäß diesem Modell wird die zu erkennende Sprachäußerung als Graph behandelt, bei dem nach jedem Knoten, der ein Wortende darstellt, nur bestimmte weitere Wörter bzw. Wortgruppen folgen können. Der nach einem Knoten folgende Teil einer Sprachäußerung wird daher nur mit solchen Wörtern bzw. den Sprachelementen solcher Wörter verglichen. Dadurch wird der Verarbeitungsaufwand beim Erkennungsprozess stark verringert. Eine Ausgabe von Sprachinformation in Reaktion auf Spracheingaben ist bei diesem System jedoch nicht vorgesehen.

Aufgabe der Erfindung ist es, ein System der eingangs genannten Art anzugeben, das bei Eingabe von weitgehend natürlicher Sprache mit den dabei normalerweise auftretenden Variationen wie grammatisch unkorrekte oder unvollständige Sätze dennoch weitgehend zuverlässig arbeitet.

Diese Aufgabe wird bei einem System zum Ausgeben von Sprachinformation in Reaktion auf eingegebene Sprachsignale nach Anspruch 1 im wesentlichen dadurch gelöst, daß aus dem Sprachsignal zunächst möglicherweise darin enthaltene Wörter bestimmt und ein Wortgraph gebildet wird, aus dem anschließend ein Konzeptgraph gebildet wird, in dem durch Anwendung einer attributierten kontextfreien stochastischen Grammatik auf den Wortgraphen Wortfolgen bzw. einzelne Wörter durch vorgegebene Konzepte ersetzt werden, für die aus den Wörtern im Wortgraphen Werte bestimmt werden. Durch Bewertungen, die aus dem Wortgraphen in den Konzeptgraphen übernommen werden und die durch Sprachmodellwerte ergänzt werden, wird schließlich ein optimaler Pfad, insbesondere die Folge von Konzepten mit der günstigsten Bewertung im Konzeptgraphen, bestimmt und aus den zugehörigen Werten der Konzepte in dieser Folge Daten für eine Datenbankanfrage abgeleitet. Dadurch wird es möglich, diejenigen Teile des eingegebenen Sprachsignals, die für die Bildung der Datenbankanfrage notwendig sind, mit geringem Aufwand zu ermitteln, wobei nicht relevante Teile des Sprachsignals nicht weiter verwendet werden und die weitere Verarbeitung auch nicht weiter belasten.

Das erfindungsgemäße Verfahren ist durch eine entsprechende, in Anspruch 7 angegebene Lösung gekennzeichnet.

Verbesserungen sind dadurch möglich, daß Sprachpausen im eingegebenen Sprachsignal erkannt und aus dem Wortgraphen entfernt werden, bevor der Konzeptgraph gebildet wird. Ferner können sogenannte Füllkonzepte eingeführt werden, durch die es leichter möglich ist, möglicherweise falsch erkannte Konzepte zu umgehen und nicht zusammenhängende Konzepte, zwischen denen also Lücken im Konzeptgraph bestehen, miteinander zu verbinden. Ferner ist es günstig, wenn nicht nur die Bwertungen aus dem Wortgraphen in den Konzeptgraphen übernommen werden, sondern wenn den Konzeptgraphen zusätzlich noch Bewertungswerte anhand eines Sprachmodells für die Konzepte zugeordnet werden. Dadurch kann der optimale Pfad zuverlässiger bestimmt werden.

Diese und weitere Aspekte der Erfindung werden noch deutlicher anhand der nachfolgenden Beschreibung eines Ausführungsbeispiels. Darin zeigen:
**Fig. 1** ein schematisches Blockschaltbild des erfindungsgemäßen Systems,
**Fig. 2 und 3** zwei Formen eines beispielsweisen Wortgraphen,
**Fig. 4 und 5** zwei Formen eines beispielsweisen Konzeptgraphen.

Bei einer Anfrage für eine Auskunft, deren Inhalt über eine Datenbankanfrage ermittelt wird, müssen aus der gesprochenen Anfrage bestimmte Werte oder Daten entnommen werden, um die Datenbankanfrage durchzuführen. Bei dem Anwendungsbeispiel, das nachfolgend erläutert wird und eine Bahn-Fahrplanauskunft darstellt, sind dies z.B. Abfahrtsort, Zielort, Datum, frühester oder spätester Zeitpunkt der Abfahrt usw.. Soll die Datenbankanfrage aus einem gesprochenen Satz abgeleitet werden, so besteht das Problem darin, die erforderlichen Werte zu ermitteln. Dafür muß der gesprochene Satz zunächst erkannt werden, und aus dem erkannten Satz muß dessen Bedeutung extrahiert werden, d.h. zur Erkennung kommt zusätzlich noch eine Art des automatischen Verstehens.

Das nachfolgend beschriebene Ausführungsbeispiel eines erfindungsgemäßen Auskunftssystems basiert auf folgenden grundsätzlichen Ideen:

Erkennung und Verstehen werden nacheinander in getrennten Moduln ausgeführt, wobei als Schnittstelle ein Wortgraph dient. Das Verstehensmodul dient dabei dazu, den besten Pfad durch den Wortgraphen zu finden und seine Bedeutung zu ermitteln. Das Verstehensmodul ist selbst wiederum in nacheinander auszuführende Komponenten mit definierter Schnittstelle unterteilt. Dadurch wird eine aufwendige, rechenzeitintensive und fehlerträchtige Kommunikation der einzelnen Moduln auf das unbedingt Notwendige reduziert, und außerdem können bestimmte Teile des Systems unabhängig von den anderen leicht modifiziert werden.

Die für eine Datenbankanfrage benötigten Angaben werden fast stets durch Elemente einer relativ begrenzten Menge von Wortfolgen ausgedrückt, wie etwa "nach <Bahnhof>" zur Angabe des Zielortes. Solche Wortfolgen werden als Konzepte bezeichnet und können in beliebiger Reihenfolge stehen und durch Füllwörter getrennt sein, ohne daß sich dadurch die jeweilige Bedeutung ändert. Es ist also nicht erforderlich, einen gesprochenen Satz vollständig abzuarbeiten, sondern es reicht aus, lediglich solche Konzepte anhand der festgelegten Wortfolgen herauszusuchen. Dadurch braucht die Anfrage nicht in einer bestimmten Form gestellt zu werden, und es können auch grammatisch fehlerhaft gesprochene oder fehlerhaft erkannte Eingabesätze häufig zumindest teilweise verarbeitet werden.

Bei der Suche nach dem besten Pfad werden lediglich die Bewertungen der Wörter bzw. Satzteile in Form von Konzepten berücksichtigt, dies entspricht der Syntax des Satzes, dagegen wird die Bedeutung des Satzes in diesem Falle nicht berücksichtigt. Dadurch wird der Rechenaufwand deutlich reduziert.

Es wird als Sprachmodell eine attributierte kontextfreie stachastische Grammatik verwendet. Diese erlaubt die Bestimmung der relevanten Teile des gesprochenen Satzes und ermöglicht außerdem die Berechnung von deren Bedeutung auf einfache Weise.

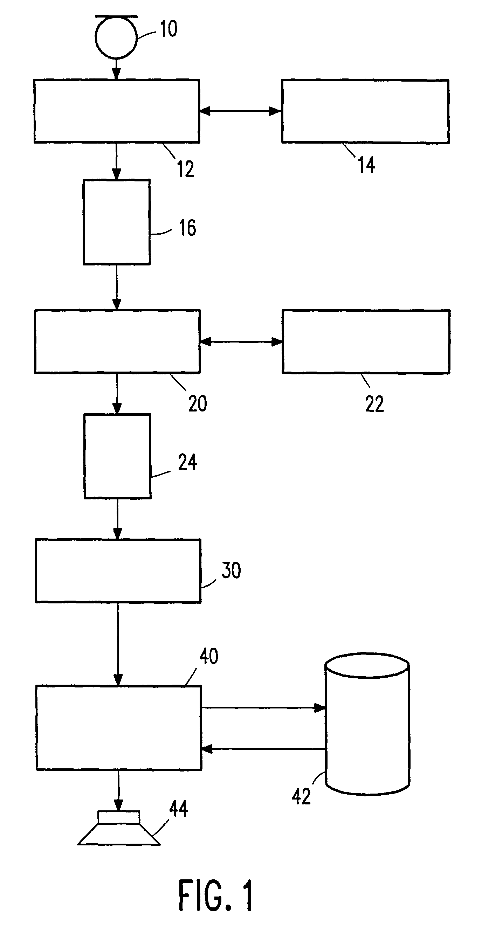

Die grundsätzliche Unterteilung zwischen Erkennungsmodul und Verstehensmodul ist in dem schematischen Blockschaltbild in Fig. 1 zu erkennen. Das Erkennungsmodul ist im wesentlichen durch den Block 12 dargestellt, dem das über das Mikrofon 10 aufgenommene Sprachsignal zugeführt wird. Dabei sind die für die Vorverarbeitung des Sprachsignals üblicherweise verwendeten Mittel wie Digitalisierung und Spektralzerlegung des Sprachsignals der Einfachheit halber nicht dargestellt. In dem Block 12 werden die vorverarbeiteten Sprachsignale mit Referenzsignalen aus einem Referenzspeicher 14 verglichen, der von der Einheit 12 angesteuert wird und Referenzsignale für die Vergleiche zurückliefert. Ein Beispiel für eine solche Einheit 12 zur Worterkennung ist in der DE 41 30 631 A1 (PHD 91-138) beschrieben.

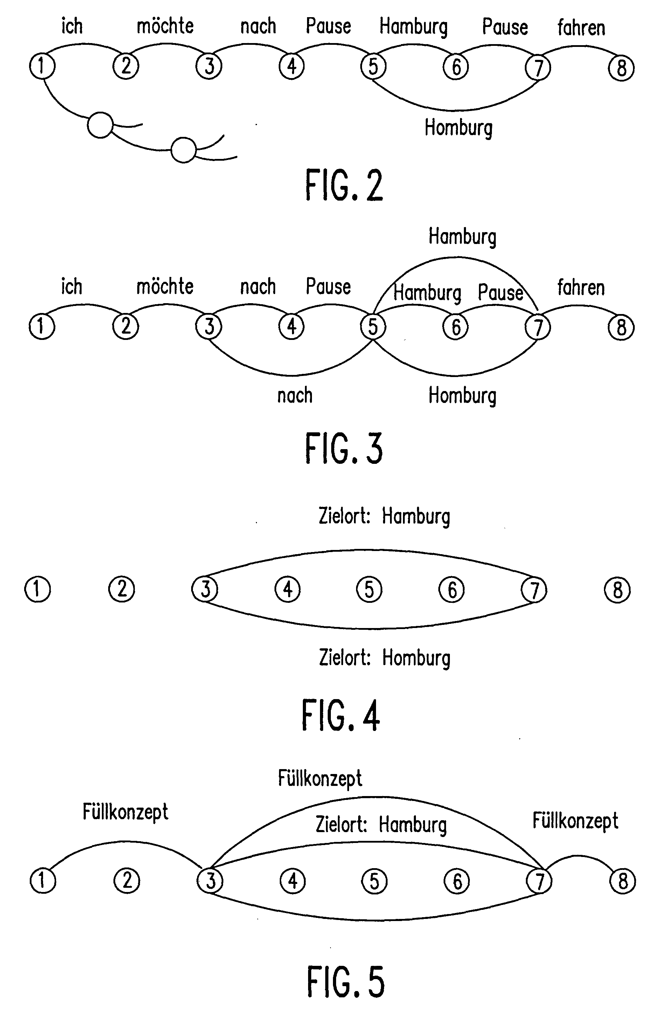

Ein vorläufiges Ergebnis der Worterkennung im Block 12 ist ein Wortgraph, für den ein vereinfachtes Beispiel in Fig. 2 dargestellt ist. Ein Wortgraph ist ein gerichteter Graph, dessen Knoten mit jeweils einem Zeitpunkt und dessen Kanten mit einem Wort und einer Bewertung markiert sind, die ein Maß für die Wahrscheinlichkeit ist, daß dieses Wort in dem Sprachsignal zwischen den Zeitpunkten entsprechend den Knoten an beiden Enden des Wortes gesprochen worden ist. In diesem beschriebenen Beispiel wird als Bewertung der negative Logarithmus dieser Wahrscheinlichkeit verwendet, so daß die einzelnen Bewertungen mehrerer Wörter hintereinander addiert werden können, jedoch können auch andere Maße für die Bewertung verwendet werden. Jeder Pfad durch den Graph entspricht einer bestimmten Wortfolge, und die Summe der zugehörigen Bewertungen gibt dann eine Wahrscheinlichkeit für diese Wortfolge an. In Fig. 2 sind die Knoten durch numerierte Kreise dargestellt, wobei im wesentlichen nur ein Pfad durch den Graphen näher dargestellt ist. Vom Anfangsknoten und von allen weiteren Knoten gehen normalerweise noch viele weitere Kanten aus, die insbesondere ähnlich klingenden Wörtern entsprechen.

Einen Sonderfall stellen die Kanten mit der Bezeichnung "Pause" dar, die tatsächlich kein Wort sind, jedoch bei der Erkennung als Pause erkannt sind. Wenn nun ein Wortgraph nach bedeutungstragenden Wortfolgen, die durch Konzepte ersetzt werden sollen, durchsucht wird, können im Wortgraph einzelne Worte solcher Wortfolgen durch wenigstens eine Pause getrennt sein und daher nicht ohne weiteres als zusammengehörig erkannt werden. Dieses Problem kann am leichtesten gelöst werden, wenn alle Pausen überbrückt werden, ohne den Inhalt des Wortgraphen dadurch zu erweitern oder zu reduzieren.

Dazu wird für jede Kante, die mit einem Wort ungleich Pause markiert ist und von deren Endknoten mindestens eine mit Pause bezeichnete Kante ausgeht, eine neue Kante mit dem gleichen Wort in den Wortgraphen eingefügt, die die beiden genannten Kanten umgeht. Ihre Bewertung ergibt sich dann aus den Bewertungen der beiden umgangenen Kanten, und zwar als Summe dieser beiden Bewertungen, wenn jede Bewertung den negativen Logarithmus der Wahrscheinlichkeit des betreffenden Elements bzw. Wortes angibt. Wenn auf diese Weise Pausen eliminiert werden und die Knoten in aufsteigender Reihenfolge durchlaufen werden, ist zugleich sichergestellt, daß auch mehrere aufeinanderfolgende Pause-Kanten berücksichtigt werden.

Der Wortgraph, der sich dabei ergibt, ist in Fig. 3 angedeutet. Darin ist die Kante "nach" vom Knoten 3 zum Knoten 4 und die Kante "Pause" vom Knoten 4 zum Knoten 5 durch eine neue Kante mit der Bezeichnung "nach" vom Knoten 3 zum Knoten 5 überbrückt. Diese neue Kante erhält eine Bewertung, die gleich der Summe der Bewertungen beider Kanten ist, d.h. des Wortes und der Pause. Entsprechend ist auch eine neue Kante vom Knoten 5 zum Knoten 7 eingefügt worden, die die Kante "Pause" vom Knoten 6 zum Knoten 7 eliminiert. Ein solcher Wortgraph wird nun von dem Block 12 ausgegeben und im Speicher 16 zwischengespeichert, von wo aus er weiterverarbeitet werden kann.

Diese Weiterverarbeitung erfolgt im Block 20, in dem aus dem Wortgraphen im Speicher 16 ein Konzeptgraph erzeugt wird. Dazu wird der Wortgraph nach bestimmten Wortfolgen durchsucht, denen Konzepte zugeordnet sind. Dies entspricht der Anwendung einer bestimmten Grammatik auf den Wortgraphen, nämlich einer attributierten kontextfreien stochastischen Grammatik, die zugleich als Sprachmodell dient, d.h. die zusätzliche Bewertungwerte für Konzepte und gegebenenfalls Konzeptfolgen liefert. Diese Grammatik in Form von Schlüsselwörtern und Regeln ist im Block 22 gespeichert. Für das Durchsuchen des Wortgraphen nach bestimmten Wortfolgen, wobei eine Wortfolge auch aus einem einzelnen Wort bestehen kann, gibt es verschiedene Möglichkeiten zur Vereinfachung. Beispielsweise können bestimmte Schlüsselwörter für Wortfolgen gesucht werden, wie das Wort "nach", und dann wird untersucht, ob nach diesem Wort der Name eines in einer Liste enthaltenen Bahnhofs steht. Ähnliches gilt für das Datum, bei dem u.a. nach der Präposition "am", gefolgt von wenigstens einer Ordnungszahl, gesucht wird.

Der Konzeptgraph entspricht dem zugehörigen Wortgraphen insofern, als er die gleichen Knoten enthält, also keine zusätzlichen Knoten, sondern eher einige Knoten weniger. Die Kanten im Konzeptgraphen sind jedoch nicht mit einzelnen Worten, sondern mit Konzepten bezeichnet. Es fehlen jedoch alle Kanten bzw. Folgen von Kanten des ursprünglichen Wortgraphen, die nicht zu einem Konzept gehören. Ebenso wie die Kanten im Wortgraphen erhalten auch die Kanten im Konzeptgraphen Bewertungen, die von den Bewertungen der Wortfolge im Wortgraphen, die dem betreffenden Konzept zugeordnet ist, abgeleitet wird, nämlich durch Addition der Bewertungen der einzelnen Wörter in der Wortfolge.

Eine wesentliche Verbesserung der Zuverlässigkeit wird dadurch erreicht, daß den Bewertungen der Kanten im Konzeptgraphen noch eine weitere Bewertung zugeordnet wird, die sich aus der Sprachmodellwahrscheinlichkeit der Grammatik ergibt. Diese weitere Bewertung wird zu dem Bewertungswert, der sich aus dem Wortgraphen ergeben hat, noch addiert. Der Wert der Sprachmodellwahrscheinlichkeit folgt aus der verwendeten stochastischen Grammatik dadurch, daß jeder Regel innerhalb der Grammatik ein Wahrscheinlichkeitswert zugeordnet wird, der angibt, mit welcher Wahrscheinlichkeit diese Regel angewendet wird. Durch Aufsummierung der Werte aller bei der betreffenden Grammatik beteiligten Regeln läßt sich dann deren Wahrscheinlichkeit bestimmen, die dann praktisch die Sprachmodellwahrscheinlichkeit ergibt, die zur zugehörigen Kante im Konzeptgraph addiert wird.

Ein Konzeptgraph, der auf diese Weise aus dem in Fig. 3 dargestellten Wortgraphen abgeleitet ist, ist in Fig. 4 dargestellt, wobei wiederum an den Kanten die Bewertung der Übersichtlichkeit halber weggelassen ist. Daraus ist jedoch ein Problem zu erkennen, daß in Konzeptgraphen aus realen Anfragen, die selbstverständlich sehr viel komplexer aufgebaut sind, kein zusammenhängender Pfad mehr vom Anfangsknoten zum Endknoten des Graphen vorhanden ist, da verschiedene Konzepte nicht mehr lückenlos aneinander stoßen. Ein weiteres Problem, das nicht ohne weiteres aus der Fig. 4 erkennbar ist, besteht darin, daß ein aus dem Wortgraphen gefundenes Konzept nicht tatsächlich gesprochen worden sein muß, denn es kann auch durch fehlerhafte Erkennung insbesondere bei dichten Wortgraphen entstanden sein. Daher wird eine Möglichkeit angegeben, nicht nur Lücken im Konzeptgraph, sondern auch einzelne Konzepte zu überbrücken.

Zu diesem Zweck werden sogenannte Füllkonzepte eingeführt, die keine Angaben enthalten, die für die Datenbankanfrage verwendet werden, und denen daher auch keine Grammatik mit Regln zugeordnet ist. Mit solchen Füllkonzepten werden nun Kanten gebildet, die Lücken zwischen zwei beliebigen Konzepten überbrücken, d.h. auch solchen Konzepten, die weit auseinander liegen und zwischen denen andere Konzepte liegen, und außerdem Kanten, die vorhandene Konzepte überbrücken. Diese Füllkonzept-Kanten erhalten ebenfalls Bewertungen, die zunächst gleich der Summe der Bewertungen derjenigen Wörter in einer Wortfolge des Wortgraphen ist, die der betreffenden Füllkonzept-Kante entspricht. In den meisten Fällen gibt es mehrere Wortfolgen in dem Wortgraphen, deren Lage der Füllkonzept-Kante entspricht, so daß dann die Wortfolge mit der kleinsten Summe der Bewertungen verwendet wird, während die übrigen Wortfolgen nicht berücksichtigt werden.

Derartige Füllkonzept-Kanten werden nun in den Konzeptgraphen eingefügt, wobei nicht mehr Füllkonzept-Kanten erzeugt werden, als unbedingt erforderlich ist; insbesondere gibt es keine parallel liegenden Füllkonzept-Kanten. Ein Beispiel für einen dadurch entstehenden Konzeptgraphen ist in Fig. 5 dargestellt, und es ist zu erkennen, daß es in jedem Fall mindestens einen Pfad vom Anfangsknoten bis zum Endknoten gibt, in konkreten Fällen bei tatsächlich gesprochenen Anfragen gibt es jedoch selbstverständlich eine große Vielzahl von geschlossenen Pfaden vom Anfangsknoten bis zum Endkonten im Konzeptgraphen.

Da die Bewertungen der Kanten, die mit Werten behaftete Konzepte darstellen, um eine Sprachmodellwahrscheinlichkeit erhöht worden sind, müssen die Füllkonzept-Kanten ebenfalls angepaßt werden. Dies erfolgt dadurch, daß jeder Füllkonzept-Kante eine Bewertung zugeordnet wird, die um eine von der Länge der Füllkonzept-Kante abhängigen zusätzlichen Bewertungswert erhöht ist. Dadurch wird vermieden, daß ein Pfad durch den Konzeptgraphen, dessen Summe der Bewertungen der Kanten minimal ist, nur Füllkonzept-Kanten enthält.

Es liegt nun ein Konzeptgraph vor, durch den praktisch immer viele Pfade vom Anfangsknoten bis zum Endknoten verlaufen. Diese Vielzahl von Pfaden entsteht durch Unsicherheiten bei der Erkennung der Wörter aus dem Sprachsignal. Die den Konzeptkanten zugeordneten Bewertungen, von denen wie beschrieben Anteile vom Wortgraphen übernommen worden sind und weitere Anteile Häufigkeiten der Konzepte angeben, können nun dazu verwendet werden, den besten Pfad durch den Konzeptgraphen zu suchen, d.h. die Folge von Konzepten, die mit größter Wahrscheinlichkeit der gesprochenen Anfrage entspricht. Dies ist also der Pfad, auf dem die Bewertungen der darauf liegenden Konzepte die kleinste Summe ergeben. Um die Zuverlässigkeit, daß dies tatsächlich die in der Anfrage gesprochene Folge von Angaben richtig wiedergibt, zu erhöhen, können jedoch vorher noch weitere Informationen verwendet werden. Diese betreffen die Folge der Konzepte im Konzeptgraphen. Es ist nämlich bei einer natürlich gesprochenen Anfrage wahrscheinlicher, daß bestimmte Angaben hintereinander gemacht werden, beispielsweise folgen die Angaben von Uhrzeit und Datum wahrscheinlicher direkt aufeinander, als daß dazwischen die Angabe eines Abfahrts- oder Zielbahnhofs steht. Es werden daher vorgegebene Bigramm-Wahrscheinlichkeiten für Konzepte berücksichtigt, die auch den Satzanfang und das Satzende mit einbeziehen. Solche Bigramm-Wahrscheinlichkeiten sind unabhängig von der Anzahl der bedeutungslosen Worte zwischen zwei aufeinanderfolgenden Konzepten. Diese Bigramm-Wahrscheinlichkeiten resultieren in zusätzlichen Bewertungswerten, die zu den Bewertungswerten an den einzelnen Kanten im Konzeptgraphen addiert werden.

Eine weitere Verbesserung besteht darin, daß zusätzlich Konzepte für bedeutungslose, aber häufig verwendete Formulierungen wie "ich hätte gern" oder "ich möchte" vorgesehen werden. Solchen Konzepten sind selbstverständlich keine Regeln zugeordnet, und sie liefern auch keine weiteren Angaben für die Datenbankanfrage. Sie dienen jedoch dazu, weitere Teile des Wortgraphen abzudecken und das Risiko zu verringern, daß Konzepte an Stellen erkannt werden, an denen sie im eingegebenen Sprachsignal tatsächlich nicht enthalten waren.

Auf diese Weise wird schließlich ein Konzeptgraph im Block 20 in Fig. 1 erzeugt, in dem der beste Pfad mit der kleinsten Summe der Bewertungen der Kanten auf diesem Pfad mit guter Zuverlässigkeit die tatsächlich gesprochene Anfrage wiedergibt. Dieser Konzeptgraph bzw. die Daten, die den Konzeptgraphen repräsentieren, werden im Speicher 24 zur Weiterverarbeitung gespeichert.

Allerdings kann dem Konzeptgraphen zunächst nur die wahrscheinlichste Folge von Konzepten entnommen werden, während für die Datenbankanfrage die Bedeutung der Konzepte, also die direkte Angabe von Zahlen oder Namen, notwendig sind. Es bietet sich an, diese Werte bei der Suche nach den Konzepten und deren Eintrag im Konzeptgraph mitzuberechnen. Dies erfordert gegenüber der Erkennung der Wörter nur wenig zusätzlichen Aufwand, und außerdem stehen diese Werte dann zugleich für alle im Konzeptgraph enthaltenen Konzepte zur Verfügung und nicht nur für die Konzepte auf dem besten Pfad. Dies kann zweckmäßig sein, wenn für die Bestimmung des besten Pfades auch diese Bedeutungswerte einbezogen werden beispielsweise um Überbestimmungen oder auch Widersprüche aufzulösen.

Die Bestimmung der Bedeutung aus der gesprochenen Anfrage, d.h. aus dem Konzeptgraphen, in den die Anfrage inzwischen umgesetzt wurde, dient letztlich dazu, die notwendigen Daten für die Datenbankanfrage zu bestimmen. Zur Bestimmung der Bedeutung dient die hier verwendete attributierte Grammatik. Diese umfaßt einen Satz von Regeln, nach denen ein bestimmter Begriff, der einer möglichen Angabe im Sprachsignal entspricht, mit Attributen versehen werden kann, über die aus dem Wortgraphen ein oder mehrere Zahlenwerte oder Namen bestimmt werden können. Wenn für ein Attribut eines Begriffs kein Wert aus dem Sprachsignal entnommen werden kann, so ist es undefiniert. Wenn ein in einer Regel vorkommendes Attribut undefiniert ist, ist der Begriff insgesamt undefiniert. Diese Eigenschaft läßt sich ausnutzen, beispielsweise für die Uhrzeit. So sind etwa die Ausdrücke "um X Uhr" und "nach X Uhr" syntaktisch ähnlich und können in einer Regel zusammengefaßt werden. Da für eine Datenbankanfrage jedoch ein Zeitintervall mit Anfangs- und Endzeitpunkten s_zeit und e_zeit benötigt wird, ist die Bedeutung der Uhrzeitangabe im Sprachsignal für die Datenbankanfrage jedoch unterschiedlich. Nur für den Ausdruck "um . . ." sind beide Zeitpunkte bekannt und identisch.

Ein Beispiel für eine Regel bzw. ein Satz von Regeln für den Begriff "Uhrzeit" ist in der nachfolgenden Tabelle angegeben:

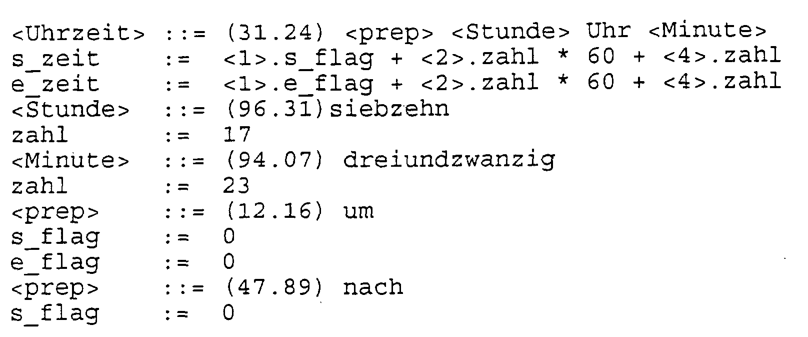

Dabei ist angenommen, daß für die Uhrzeit selbst "17 Uhr 23" gesprochen wurde. Die in der Tabelle in runden Klammern angegebenen Zahlenwerte ergeben insgesamt den Wert für die bereits erwähnte Sprachmodellwahrscheinlichkeit, um den die Bewertung des Konzepts aus dem Wortgraphen erhöht wird.

Die Bestimmung des Datums ist etwas komplizierter, da auch komplexere Formulierungen wie "3 Tage vor Weihnachten" oder "diesen Monat noch" vorkommen können. Der Begriff "Datum" kann sich bei einer Anfrage für eine Fahrplanauskunft auch auf mehrere aufeinanderfolgende Tage beziehen.

Ein Datum wird aus fünf natürlichen Zahlen zusammengesetzt, nämlich Jahr, Monat, Tag im Monat, Wochentag (als Ziffer, gezählt von Montag an) und Dauer in Tagen. Beispielsweise wird die Angabe Freitag, der 22.1.93 "den Wert bzw. die Wertefolge 1993,01,22,5,1" ergeben. Wichtig ist dabei, daß jeder einzelne Wert durch Weglassen auch undefiniert sein kann. Die Wertefolge ",,,5,1" beschreibt einfach einen nicht näher bestimmten Freitag. Andererseits können fehlende Angaben im Datum oft auch aus dem momentanen Datum ergänzt werden, beispielsweise ist die Angabe "nächsten Freitag" bestimmbar aus dem momentanen Datum plus der Differenz zwischen der Ziffer des momentanen Wochentags und der Ziffer 5 für Freitag. In einfacherer Form gilt Ähnliches auch für die Uhrzeit, beispielsweise kann für "vormittags" eine feste Zeitspanne von beispielsweise 9 Uhr bis 12 Uhr angenommen werden. In jedem Falle läßt sich aus derartigen Angaben ein eindeutiger Satz von Werten für eine Datenbankanfrage ableiten.

Wenn aus dem im Speicher 24 vorliegenden Konzeptgraphen, der auch die Werte der einzelnen Konzepte enthält, in Block 30 der optimale Pfad ausgewählt wird, also diejenige Folge von Konzepten einschließlich Füllkonzepten, die die geringste Summe der einzelnen Bewertungswerte ergibt, kann es jedoch auch vorkommen, daß durch unkorrekte Spracheingabe oder durch ungenaue Erkennung Probleme auftreten. Das kann dazu führen, daß z.B. einzelne Konzepte wie z.B. "Zielort" mehrfach eingegeben bzw. erkannt sein können, zum anderen können jedoch auch notwendige Konzepte völlig fehlen. Hierfür gibt es mehrere Ursachen:
- Bereits der gesprochene Satz enthält Widersprüche oder nicht alle benötigten Angaben.
- Bei der Erkennung, also der Erzeugung des Wortgraphen, sind Fehler entstanden, die sich nicht nur in den irrelevanten Füllworten auswirken.
- Eine vom Sprecher verwendete Formulierung wird nicht von der Grammatik abgedeckt und daher nicht als bedeutungstragend verstanden.
- Der ausgewählte Pfad durch den Konzeptgraphen entspricht nicht dem optimalen Pfad.

Diese Probleme lassen sich jedoch durch Anwendung von wenigstens einem der drei folgenden Schritte lösen:
1.) Beispielsweise eine doppelte Angabe eines Zielbahnhofs, der in beiden Fällen den gleichen Namen hat, ergibt für die Datenbankanfrage lediglich den Namen des Zielbahnhofs. Ferner kann beispielsweise die Zeitangabe "früh" das Zeitintervall von 5 Uhr bis 10 Uhr morgens bedeuten. Die Angabe "acht Uhr" kann als 8.00 Uhr oder auch als 20.00 Uhr interpretiert werden. Aus beiden Angaben zusammen ist jedoch die eindeutige Uhrzeit 8.00 Uhr morgens zu ermitteln.
2.) Wenn nach dem ersten Schritt noch gleiche Konzepte mit unterschiedlichen Werten existieren, so werden alle Werte bis auf einen entfernt. Behalten wird lediglich derjenige Wert, nach dessen Beseitigung der Wahrscheinlichkeitswert für den berechneten Pfad durch den Konzeptgraph die größte Verschlechterung erfahren würde.
3.) Fehlen dagegen benötigte Werte, so werden diese durch vorgegebene Annahmen ersetzt. Ist etwa kein Ausgangsbahnhof angegeben, so wird der Standort des Systems eingesetzt. Bei einem fehlenden Datum wird das aktuelle Datum angenommen. Auf ähnliche Weise lassen sich noch andere fehlende Werte ergänzen.

Auf diese Weise ist das vorstehend beschriebene erfindungsgemäße System in der Lage, aus den meisten natürlich gesprochenen Anfragen eindeutig die Daten für eine Datenbankanfrage zu ermitteln. Diese wird in dem Block 40 in Fig. 1 durchgeführt, wo aus den Werten der Konzepte im optimalen Pfad durch den Konzeptgraphen, der im Block 30 bestimmt wurde, Steuerdaten für die Ansteuerung eines Speichers 42 gebildet werden. Dieser Speicher 42 enthält einen Satz möglicher Antworten, im Falle einer Fahrplanauskunft also die Zeiten für Abfahrt oder Abflug und Ankunft sowie mögliche weitere Fahrplanhinweise. Die aus dem Speicher ausgelesenen Antworten werden im Block 40 in einen vollständigen Satz umgesetzt, sofern diese Antworten nicht bereits als vollständige Sätze vorliegen, und dieser Satz wird in ein Sprachsignal umgesetzt und über den Lautsprecher 44 ausgegeben. Im Falle eines telefonischen Auskunftsystems ist selbstverständlich zwischen dem Block 40 und dem Lautsprecher 44 eine nicht dargestellte Telefonverbindung vorhanden, ebenso wie zwischen dem Mikrofon 10 und dem Block 12.

Grundsätzlich ist es auch möglich, wenn trotz Anwendung der vorher beschriebenen Schritte zur Ergänzung oder Beseitigung von Überbestimmungen immer noch keine vollständige eindeutige Datenbankanfrage vorliegt, abhängig von fehlenden oder fehlerhaften Angaben bestimmte Fragen zu erzeugen, wofür ebenfalls der Speicher 42 verwendet werden kann, und diese Rückfragen an den Auskunftssuchenden auszugeben, um fehlende oder korrigierende Angaben zu erhalten.

## Patentansprüche

1. System zum Ausgeben von Sprachinformation in Reaktion auf eingegebene Sprachsignale mit
- ersten Mitteln zum Vergleichen der Sprachsignale mit gespeicherten Referenzsignalen, die Wörtern entsprechen, und zum Ausgeben von Wörtern, die durch die Vergleiche ermittelt worden sind zusammen mit einer Bewertung und mit Angaben über Anfangs- und Endpunkt für jedes ausgegebene Wort und zum Speichern der ausgegebenen Wörter mit den Angaben zur Bildung eines Wortgraphen aus aneinanderschließenden Wörtern,
- zweiten Mitteln zum Ersetzen von vorgegebenen Wortfolgen im Wortgraphen durch vorgegebene Konzepte mit einer Bewertung, die von der Summe der Bewertungen der Wörter der ersetzten Wortfolge abgeleitet ist, und mit den gleichen Anfangs- und Endpunkten wie die betreffende ersetzte Wortfolge zum Bilden eines Konzeptgraphen und zum Bestimmen von Werten aus den ersetzten Wortfolgen für die einzelnen Konzepte im Konzeptgraphen,
- dritten Mitteln zum Bestimmen einer Folge von Konzepten aus dem Konzeptgraphen anhand der Bewertungen,
- vierten Mitteln zum Umsetzen der Werte in den Konzepten der Folge in Daten für eine Datenbankanfrage zum Ansteuern eines Speichers, der vorgegebene Wörter bzw. Wortfolgen enthält, und zum Ausgeben ausgewählter Wortfolgen in Form von vollständigen Sätzen.

2. System nach Anspruch 1, wobei die ersten Mittel eingerichtet sind, um Sprachpausen im Sprachsignal zu erkennen und mit einer Bewertung auszugeben und im Wortgraphen jede Folge eines Wortes und einer unmittelbar daran anschließenden Sprachpause durch das Wort zu ersetzen, das eine ergänzte Bewertung gleich der Kombination der Bewertungen des Wortes und der Sprachpause erhält.

3. System nach Anspruch 1, wobei die zweiten Mittel eingerichtet sind, um im 1. Fall für jedes Konzept zusätzlich ein Füllkonzept und ferner im 2. Fall zwischen Paaren von zwei Konzepten im Konzeptgraphen, die nicht unmittelbar aneinander anschließen, ein Füllkonzept zu erzeugen, wobei im 1. Fall jedes Füllkonzept eine Bewertung erhält, die von der Summe der Bewertungen der Wörter im Wortgraphen abgeleitet ist, die durch das Füllkonzept ersetzt sind, und wobei im 2. Fall keinem Füllkonzept ein Wert zugeordnet ist.

4. System nach Anspruch 3, wobei die zweiten Mittel eingerichtet sind zum Ergänzen der Bewertung der Konzepte im Konzeptgraphen um einen konzeptabhängigen zusätzlichen Bewertungswert und der Füllkonzepte um einen von der Länge des betreffenden Füllkonzepts abhängigen zusätzlichen Bewertungswert.

5. System nach Anspruch 4, wobei die zweiten Mittel eingerichtet sind zum Ergänzen der Bewertung der Konzepte im Konzeptgraphen um eine Bewertung, die von der Kombination jedes Konzepts mit jedem unmittelbar vorhergehenden Konzept bzw. mit dem unmittelbar vorhergehenden Anfang des Sprachsignals abhängig ist.

6. System nach Anspruch 1, wobei die zweiten Mittel eingerichtet sind, um weitere Wortfolgen im Wortgraphen durch vorgegebene Leerkonzepte zu ersetzen, aus denen keine Werte zur Umsetzung in Daten für eine Datenbankanfrage bestimmbar sind, wobei den Leerkonzepten wenigstens eine Bewertung zugeordnet ist.

7. Verfahren zum Ausgeben von Sprachinformation in Reaktion auf eingegebene Sprachsignale mit folgenden Schritten:
- die Sprachsignale werden mit gespeicherten Referenzsignalen verglichen, die Wörtern entsprechen, und Wörter, die durch die Vergleiche ermittelt worden sind, werden zusammen mit einer Bewertung und mit Angaben über Anfangs- und Endpunkt für jedes solche Wort ausgegeben und mit den Angaben zur Bildung eines Wortgraphen aus aneinanderschließenden Wörtern gespeichert,
- im Wortgraphen werden vorgegebene Wortfolgen durch vorgegebene Konzepte mit einer Bewertung ersetzt, die von der Summe der Bewertungen der Wörter der ersetzten Wortfolge abgeleitet ist, wobei die Konzepte die gleichen Anfangs- und Endpunkte wie die betreffende ersetzte Wortfolge haben, um einen Konzeptgraphen zu bilden und um Werte aus den ersetzten Wortfolgen für die einzelnen Konzepte im Konzeptgraphen zu bestimmen,
- aus dem Konzeptgraphen wird anhand der Bewertungen eine Folge von Konzepten bestimmt ,
- die Werte in den Konzepten der Folge werden in Daten für eine Datenbankanfrage zum Ansteuern eines Speichers umgesetzt, der vorgegebene Wörter bzw. Wortfolgen enthält, und ausgewählte Wortfolgen in Form von vollständigen Sätzen werden ausgegeben.

8. Verfahren nach Anspruch 7, wobei Sprachpausen im Sprachsignal erkannt und mit einer Bewertung ausgegeben werden und im Wortgraphen jede Folge eines Wortes und einer unmittelbar daran anschließenden Sprachpause durch das Wort selbst ersetzt wird, wobei dieses Wort eine ergänzte Bewertung gleich der Kombination der Bewertungen des Wortes und der Sprachpause erhält.

9. Verfahren nach Anspruch 7, wobei im 1. Fall für jedes Konzept zusätzlich ein Füllkonzept und ferner im 2. Fall zwischen Paaren von zwei Konzepten im Konzeptgraphen, die nicht unmittelbar aneinander anschließen, ein Füllkonzept erzeugt wird, wobei im 1. Fall jedes Füllkonzept eine Bewertung erhält, die von der Summe der Bewertungen der Wörter im Wortgraphen abgeleitet wird, die durch das Füllkonzept ersetzt sind, und wobei im 2. Fall keinem Füllkonzept ein Wert zugeordnet ist.

10. Verfahren nach Anspruch 9, wobei die Bewertung der Konzepte im Konzeptgraphen um einen konzeptabhängigen zusätzlichen Bewertungswert und die Füllkonzepte um einen von der Länge des betreffenden Füllkonzepts abhängigen zusätzlichen Bewertungswert ergänzt werden.

11. Verfahren nach Anspruch 10, wobei die Bewertung der Konzepte im Konzeptgraphen um eine Bewertung ergänzt wird, die von der Kombination jedes Konzepts mit jedem unmittelbar vorhergehenden Konzept bzw. mit dem unmittelbar vorhergehenden Anfang des Sprachsignals abhängig ist.

12. Verfahren nach Anspruch 7, wobei weitere Wortfolgen im Wortgraphen durch vorgegebene Leerkonzepte ersetzt werden, aus denen keine Werte zur Umsetzung in Daten für eine Datenbankanfrage bestimmbar sind, und den Leerkonzepten wenigstens eine Bewertung zugeordnet wird.

## Claims

1. A system for outputting speech information in response to input speech signals, comprising
- first means for comparing the speech signals with stored reference signals which correspond to words, and for outputting words determined by the comparisons, together with a score and with statements as regards starting point and end point for each word output, and for storing the words output with the statements in order to form a word graph from consecutive words,
- second means for replacing predetermined word sequences in the word graph by predetermined concepts with a score which is derived from the sum of the scores of the words of the word sequence replaced, and also with the same starting and end points as the relevant replaced word sequence in order to form a concept graph and to determine values from the replaced word sequences for the individual concepts in the concept graph,
- third means for determining a sequence of concepts from the concept graph on the basis of the scores,
- fourth means for converting the values in the concepts of the sequence into data for a database enquiry in order to control a memory which contains predetermined words or word sequences, and for outputting selected word sequences in the form of complete sentences.

2. A system as claimed in Claim 1, in which the first means are arranged to recognize speech pauses in the speech signal, to output these pauses with a score, and to replace each sequence of a word and a directly subsequent speech pause in the word graph by the word obtaining a supplemented score equal to the combination of the scores of the word and the speech pause.

3. A system as claimed in Claim 1, in which the second means are arranged, in the first case, to generate additionally, for each concept, a filler concept and also, in the second case, a filler concept between pairs of two concepts in the concept graph which do not directly adjoin one another, each filler concept in the first case being given a score which is derived from the sum of the scores of the words in the word graph which have been replaced by the filler concept, in the second case no value being assigned to any filler concept.

4. A system as claimed in Claim 3, in which the second means are arranged to supplement the score of the concepts in the concept graph by a concept-dependent additional score and the filler concepts by an additional score which is dependent on the length of the relevant filler concept.

5. A system as claimed in Claim 4, in which the second means are arranged to supplement the score of the concepts in the concept graph by a score which is dependent on the combination of each concept with each directly preceding concept or with the directly preceding start of the speech signal.

6. A system as claimed in Claim 1, in which the second means are arranged to replace further word sequences in the word graph by predetermined dummy concepts wherefrom no values can be determined for conversion into data for a database enquiry, at least one score being assigned to the dummy concepts.

7. A method for outputting speech information in response to input speech signals, comprising the following steps:
- comparing the speech signals with stored reference signals which correspond to words, and outputting words determined by the comparisons, together with a score and with statements as regards starting point and end point for each word output, and storing the words output with the statements in order to form a word graph from consecutive words,
- replacing predetermined word sequences in the word graph by predetermined concepts with a score which is derived from the sum of the scores of the words of the word sequence replaced, the concepts having the same starting and end points as the relevant replaced word sequence in order to form a concept graph and to determine values from the replaced word sequences for the individual concepts in the concept graph,
- determining a sequence of concepts from the concept graph on the basis of the scores,
- converting the values in the concepts of the sequence into data for a database enquiry in order to control a memory which contains predetermined words or word sequences, and outputting selected word sequences in the form of complete sentences.

8. A method as claimed in Claim 7, in which speech pauses in the speech signal are recognized and output with a score, and each sequence of a word and a directly subsequent speech pause in the word graph is replaced by the word obtaining a supplemented score equal to the combination of the scores of the word and the speech pause.

9. A method as claimed in Claim 7, in which in the first case additionally, for each concept, a filler concept is generated and, in the second case, also a filler concept between pairs of two concepts in the concept graph which do not directly adjoin one another, and in the first case each filler concept is given a score which is derived from the sum of the scores of the words in the word graph which have been replaced by the filler concept, and in the second case no value is assigned to any filler concept.

10. A method as claimed in Claim 9, in which the score of the concepts in the concept graph is supplemented by a concept-dependent additional score and the filler concepts are supplemented by an additional score which is dependent on the length of the relevant filler concept.

11. A method as claimed in Claim 10, in which the score of the concepts in the concept graph is supplemented by a score which is dependent on the combination of each concept with each directly preceding concept or with the directly preceding start of the speech signal.

12. A method as claimed in Claim 7, in which further word sequences in the word graph are replaced by predetermined dummy concepts wherefrom no values can be determined for conversion into data for a database enquiry, at least one score being assigned to the dummy concepts.

## Revendications

1. Système de reproduction synthétique de parole en réponse à des signaux de parole fournis avec
- des premiers moyens pour comparer les signaux de parole avec des signaux de référence enregistrés qui correspondent à des mots et pour reproduire des mots qui ont été déterminés par les comparaisons ainsi qu'avec une évaluation et des indications sur le moment de début et le moment de fin pour chaque mot reproduit et pour enregistrer les mots reproduits avec les indications en vue de la formation d'un graphique de mots à partir de mots successifs,
- des deuxièmes moyens pour remplacer des séquences de mots préalablement déterminées dans le graphique de mots par des concepts préalablement déterminés avec une évaluation qui est dérivée de la somme des évaluations des mots de la séquence de mots remplacées et avec les mêmes points de départ et d'arrivée que la séquence de mots remplacée correspondante pour former un graphique de concept et pour déterminer les valeurs à partir des séquences de mots remplacées pour les différents concepts dans le graphique de concept,
- des troisièmes moyens pour déterminer une séquence de concepts à partir du graphique de concept à l'aide des évaluations,
- des quatrièmes moyens pour transformer les valeurs dans les concepts de la séquence en données pour une interrogation de la base de données en vue de commander une mémoire qui contient des mots ou séquences de mots préalablement déterminées et pour sortir des séquences de mots sélectionnées sous la forme de phrases complètes.

2. Système selon la revendication 1, les premiers moyens étant organisés pour reconnaître des pauses de parole dans le signal de parole et émettre une évaluation et pour remplacer dans le graphique de mots chaque séquence d'un mot et d'une pause de parole immédiatement consécutive par le mot qui obtient une évaluation complétée égale à la combinaison des évaluations du mot et de la pause de parole.

3. Système selon la revendication 1, les deuxièmes moyens étant organisés pour produire, dans le premier cas, un concept de remplissage supplémentaire pour chaque concept et par ailleurs pour produire, dans le deuxième cas, un concept de remplissage entre les paires de deux concepts dans le graphique de concept qui ne se succèdent pas directement, chaque concept de remplissage recevant dans le premier cas une évaluation qui est dérivée de la somme des évaluations des mots dans le graphique de mots qui ont été remplacées par le concept de remplissage et une valeur n'étant affectée à aucun concept de remplissage dans le deuxième cas.

4. Système selon la revendication 3, les deuxièmes moyens étant organisés pour compléter l'évaluation des concepts dans le graphique de concept d'une valeur d'évaluation supplémentaire dépendant du concept et des concepts de remplissage d'une valeur d'évaluation supplémentaire dépendant de la longueur du concept de remplissage correspondant.

5. Système selon la revendication 4, les deuxièmes moyens étant organisés pour compléter l'évaluation des concepts dans le graphique de concept d'une évaluation qui dépend de la combinaison de chaque concept avec chaque concept immédiatement précédent ou avec le début immédiatement précédent du signal de parole.

6. Système selon la revendication 1, les deuxièmes moyens étant organisés pour remplacer des séquences de mots supplémentaires dans le graphique de mots par des concepts vides préalablement déterminés à partir desquels aucune valeur ne peut être déterminée pour sa conversion en données pour une interrogation de base de données, au moins une évaluation étant affectée aux concepts vides.

7. Procédé de reproduction d'information de parole en réponse à des signaux de parole fournis avec les étapes suivants :
- les signaux de parole sont comparés à des signaux de référence enregistrés qui correspondent à des mots et les mots qui ont été déterminés par les comparaisons sont reproduits avec une évaluation et des indications sur le moment de début et de fin pour chaque mot de ce type et enregistrés avec les indications pour la formation d'un graphique de mots à partir de mots successifs,
- dans le graphique de mots, des séquences de mots préalablement déterminées sont remplacées par des concepts préalablement déterminés avec une évaluation qui est dérivée de la somme des évaluations des mots de la séquence de mots remplacée, les concepts ayant les mêmes moments de début et de fin que la séquence de mots remplacée correspondante pour former un graphique de concept et pour déterminer des valeurs à partir des séquences de mots remplacées pour les différents concepts dans le graphique de concept,
- à partir du graphique de concept, une séquence de concepts est déterminée à l'aide des évaluations,
- les valeurs dans les concepts de la séquence sont converties en données pour une interrogation de base de données en vue de commander une mémoire qui contient des mots ou séquences de mots préalablement déterminés et les séquences de mots sélectionnées sont reproduites sous la forme de phrases complètes.

8. Procédé selon la revendication 7, des pauses de parole étant reconnues dans le signal de parole et reproduites avec une évaluation et chaque séquence d'un mot et d'une pause de parole immédiatement consécutive étant remplacée par le mot lui-même dans le graphique de mots, ce mot obtenant une évaluation complétée égale à la combinaison des évaluations du mot et de la pause de parole.

9. Procédé selon la revendication 7, dans lequel, dans le premier cas, pour chaque concept, il est produit en supplément un concept de remplissage et par ailleurs, dans le deuxième cas, un concept de remplissage est produit entre des paires de deux concepts dans le graphique de concept qui ne se succèdent pas directement, chaque concept de remplissage obtenant, dans le premier cas, une évaluation qui est dérivée de la somme des évaluations des mots dans le graphique de mots qui ont été remplacées par le concept de remplissage et une valeur n'étant pas affectée, dans le deuxième cas, à un concept de remplissage.

10. Procédé selon la revendication 9, l'évaluation des concepts dans le graphique de concept étant complétée d'une valeur d'évaluation supplémentaire dépendant du concept et les concepts de remplissage étant complétés d'une valeur d'évaluation supplémentaire dépendant de la longueur du concept de remplissage correspondant.

11. Procédé selon la revendication 10, l'évaluation des concepts dans le graphique de concept étant complétée d'une évaluation qui dépend de la combinaison de chaque concept avec chaque concept immédiatement précédent ou avec le début immédiatement précédent du signal de parole.

12. Procédé selon la revendication 7, d'autres séquences de mots étant remplacées dans le graphique de mots par des concepts vides préalablement déterminés à partir desquels aucune valeur ne peut être déterminée pour la conversion en données pour une interrogation de base de données et au moins une évaluation étant affectée aux concepts vides.
